# EUROPÄISCHE PATENTANMELDUNG

(11) **EP 4 344 970 A1**
(43) Veröffentlichungstag der Anmeldung: **03.04.2024**
(21) Anmeldenummer: 23197588.9
(22) Anmeldetag: 15.09.2023
(51) Int. Cl.: B60T 17/22, B60T 8/17, B60T 8/172

(54) **SOLLKRAFTBESTIMMUNGSVERFAHREN**

(30) Priorität: 29.09.2022 DE 102022210317
(71) Anmelder: Siemens Mobility GmbH, 81739 München (DE)
(72) Erfinder: Knoll, Markus, 96172 Mühlhausen (DE)
(74) Vertreter: Siemens Patent Attorneys

(57) **Zusammenfassung**

Die Erfindung bezieht sich unter anderem auf ein Sollkraftbestimmungsverfahren zum Ermitteln einer Sollkraftverteilung (SKV), die die Sollkraft zumindest zweier Bremseinheiten (31-i) eines Schienenfahrzeugs (30) während eines realen oder simulierten Bremsbetriebs beschreibt. Erfindungsgemäß ist bezüglich dieses Verfahrens vorgesehen, dass den zumindest zwei Bremseinheiten (31-i) jeweils eine Sollbremskraftangabe (SKi) zugeordnet wird, die die von der jeweiligen Bremseinheit (31-i) aufzubringende Sollbremskraft beschreibt, für die zumindest zwei Bremseinheiten (31-i) jeweils die tatsächlich realisierte Istbremskraft unter Bildung einer Istbremskraftangabe (IKi) ermittelt wird, für jede Bremseinheit (31-i) jeweils eine Kannbremskraftangabe (KKi), die das maximale Bremsvermögen der jeweiligen Bremseinheit (31-i) beschreibt, ermittelt wird, und zwar unter Einbezug einer Bremsmasseangabe (BMi), die die von der jeweiligen Bremseinheit (31-i) zu bremsende Masse beschreibt, und einer Achsgeschwindigkeitsangabe (Vi), die die Achsgeschwindigkeit einer Achse, die von der jeweiligen Bremseinheit (31-i) gebremst wird, beschreibt, und eine vorgegebene, von dem Schienenfahrzeug (30) zu erbringende Gesamtbremskraft (GBK) anhand der Kannbremskraftangaben (KKi) unter Bildung der Sollkraftverteilung (SKV) auf die Bremseinheiten (31-i) verteilt wird.

## Beschreibung

Die Erfindung bezieht sich auf Sollkraftbestimmungsverfahren und Modifikationsverfahren dafür, Sollkraftbestimmungseinrichtungen und Modifikationseinrichtungen dafür, entsprechende Computerprogrammprodukte und entsprechende Fahrzeugsteuergeräte für Schienenfahrzeuge.

Im Bereich der Eisenbahntechnik weisen Schienenfahrzeuge üblicherweise eine Vielzahl an über das Schienenfahrzeug verteilten Bremsen auf. Typischerweise gibt es verschleißfreie Bremsen wie beispielsweise elektrodynamische Bremsen (ED-Bremsen), bei denen der Antrieb bremst und die Bremsenergie ins Netz zurückspeist oder in fahrzeugeigene Bremswiderstände einspeist, sowie Reibungsbremsen wie beispielsweise elektropneumatische Bremsen (EP-Bremsen), die verschleißbehaftet bremsen. Neben der Verschleißfreiheit und der Rückspeisemöglichkeit ins Netz haben die elektrodynamischen Bremsen gegenüber den verschleißbehafteten Bremsen noch den Vorteil, dass mit der Bremsenergie auch Batterien des Schienenfahrzeugs geladen werden können.

Über einen Verteilalgorithmus wird die aus der gewünschten Soll-Verzögerung ermittelte Gesamtbremskraft bzw. Soll-Zugbremsbremskraft auf die einzelnen verschleißbehafteten und verschleißfreien Bremsen verteilt. Bei schlechten Haftwertbedingungen im Rad/Schiene-Kontakt wird zur Vermeidung von Radstillständen die Bremskraft reduziert, d. h. die angeforderte Bremskraft wird nicht mehr umgesetzt. Um den Bremskraftverlust zugweit und damit die Bremswegverlängerung zu reduzieren, werden die Bremskräfte bei heutzutage im Einsatz befindlichen Schienenfahrzeugen auf alle Bremseinheiten masseproportional gleichmäßig verteilt (sogenannter Proportionalbetrieb), damit jede Bremseinheit einen annähernd gleichen Rad/Schiene-Haftwert ausnutzt. Dieser Proportionalbetrieb bzw. dessen Ziel der Reduktion der Bremswegverlängerung steht oftmals dem Ziel entgegen, aus ökonomischen und ökologischen Gründen möglichst viel Bremskraft auf die verschleißfreien Bremsen zu verteilen.

Der Erfindung liegt die Aufgabe zugrunde, ein Sollkraftbestimmungsverfahren zum Ermitteln einer Sollkraftverteilung, die die Sollkraft zumindest zweier Bremseinheiten eines Schienenfahrzeugs während eines realen oder simulierten Bremsbetriebs beschreibt, anzugeben, das einfach und schnell durchführbar ist.

Diese Aufgabe wird erfindungsgemäß durch ein Sollkraftbestimmungsverfahren mit den Merkmalen gemäß Patentanspruch 1 gelöst. Vorteilhafte Ausgestaltungen des erfindungsgemäßen Sollkraftbestimmungsverfahrens sind in Unteransprüchen angegeben.

Danach ist erfindungsgemäß vorgesehen, dass den zumindest zwei Bremseinheiten jeweils eine Sollbremskraftangabe zugeordnet wird, die die von der jeweiligen Bremseinheit aufzubringende Sollbremskraft beschreibt, für die zumindest zwei Bremseinheiten jeweils die tatsächlich realisierte Istbremskraft unter Bildung einer Istbremskraftangabe ermittelt wird, für jede Bremseinheit jeweils eine Kannbremskraftangabe, die das maximale Bremsvermögen der jeweiligen Bremseinheit beschreibt, ermittelt wird, und zwar unter Einbezug einer Bremsmasseangabe, die die von der jeweiligen Bremseinheit zu bremsende Masse beschreibt, und einer Achsgeschwindigkeitsangabe, die die Achsgeschwindigkeit einer Achse, die von der jeweiligen Bremseinheit gebremst wird, beschreibt, und eine vorgegebene, von dem Schienenfahrzeug zu erbringende Gesamtbremskraft anhand der Kannbremskraftangaben unter Bildung der Sollkraftverteilung auf die Bremseinheiten verteilt wird.

Ein wesentlicher Vorteil des erfindungsgemäßen Sollkraftbestimmungsverfahrens ist darin zu sehen, dass dieses erfindungsgemäß Kannbremskraftangaben ermittelt. Die Kannbremskraftangaben beschreiben das tatsächliche maximale Bremsvermögen der Bremseinheiten und stellen somit einen idealen Parameter für eine schnelle Ermittlung der jeweils optimalen Sollkraftverteilung zur Verfügung. Mit anderen Worten ist es also beispielsweise möglich - im Falle eines Unterschreitens der Sollbremskraftangaben durch die Istbremskraftangaben - die Sollkraftverteilung unter Berücksichtung der bremseinheitsindividuellen Kannbremskraftangaben neu zu ermitteln und dabei die Sollkraftverteilung für einen maximalen Einsatz der verschleißfreien Bremsen zu optimieren. Die Bestimmung der Sollkraftverteilung auf der Basis der Kannbremskraftangaben kann in einfacher Weise beispielsweise mittels eines angelernten bzw. trainierten Systems künstlicher Intelligenz erfolgen, das auf einem oder mehreren neuronalen Netzen beruhen kann.

Mit Blick auf die Ermittlung einer möglichst optimalen Sollkraftverteilung wird es als vorteilhaft angesehen, wenn mindestens eine der Bremseinheiten eine Radbremseinrichtung aufweist, die auf ein Rad der von der Bremseinheit gebremsten Achse einwirkt und deren Temperatur und/oder Laufflächenbeschaffenheit beeinflusst, und die Ermittelung der Kannbremskraftangabe dieser Bremseinheit den von der Radbremseinrichtung hervorgerufenen Einfluss auf den Rad-Schiene-Kontakt zwischen dem von der Radbremseinrichtung gebremsten Rad und einer von dem Rad befahrenen Schiene berücksichtigt.

Die Berücksichtigung des Rad-Schiene-Kontakts - im Rahmen der Bestimmung der Kannbremskraftangaben - erlaubt es in vorteilhafter Weise beispielsweise, durch gezielte Ansteuerung der Radbremseinrichtungen im Rahmen der Festlegung der Sollkraftverteilung die umsetzbare Kannbremskraft für die die jeweilige Radbremseinrichtung aufweisende Bremseinheit zu erhöhen.

Die Ermittlung der Kannbremskraftangaben berücksichtigt vorzugsweise auch den von vorauslaufenden Bremseinheiten hervorgerufenen Einfluss auf den Rad-Schiene-Kontakt nachlaufender Bremseinheiten und damit die Kannbremskraft der nachlaufenden Bremseinheiten. Die Berücksichtigung des Rad-Schiene-Kontakts erlaubt es somit beispielsweise, durch gezielte Ansteuerung vorauslaufender Bremseinheiten die umsetzbare Kannbremskraft bei nachlaufenden Bremseinheiten zu erhöhen.

Die Ermittlung der Kannbremskraftangaben wird vorzugsweise von einem angelernten Kannbremskraftermittlungssystem künstlicher Intelligenz durchgeführt, das unter Heranziehung simulierter und/oder gemessener Kannbremskraftangaben unter Einbezug der korrespondierenden Sollbremskraftangaben, Istbremskraftangaben, Bremsmasseangaben und Achsgeschwindigkeitsangaben angelernt bzw. trainiert worden ist.

Die Verteilung der von dem Schienenfahrzeug zu erbringenden Gesamtbremskraft auf die Bremseinheiten wird vorzugsweise von einem angelernten Computersystem künstlicher Intelligenz durchgeführt, das unter Heranziehung simulierter oder gemessener Kannbremskraftangaben und simulierter oder gemessener Sollkraftverteilungen angelernt worden ist. Mit anderen Worten kann die Verteileinrichtung als angelerntes Sollkraftverteilungssystem künstlicher Intelligenz ausgebildet sein.

Die Erfindung bezieht sich außerdem auf ein Modifikationsverfahren zum Modifizieren eines Sollkraftbestimmungsverfahrens, wie es oben beschrieben worden ist. Erfindungsgemäß ist bezüglich eines solchen Modifikationsverfahrens vorgesehen, dass ein Bremsverlauf, der auf der Basis einer Sollkraftverteilung, die nach einem Sollkraftbestimmungsverfahren wie oben beschrieben ermittelt worden ist, simuliert oder real durchgeführt worden ist, hinsichtlich zumindest einer Bremsverlaufsangabe ausgewertet wird, die zumindest eine Bremsverlaufsangabe mit einer zugeordneten Referenzangabe verglichen wird und in Abhängigkeit vom Ergebnis des Vergleichs das Sollkraftbestimmungsverfahren und/oder das Modifikationsverfahren modifiziert wird oder eine Modifikation unterbleibt.

Wie oben bereits erwähnt, wird die Ermittlung der Kannbremskraftangaben und die Ermittlung der Sollkraftverteilung vorzugsweise von einem oder mehreren Systemen künstlicher Intelligenz durchgeführt. Bei dem Modifikationsverfahren handelt es sich demzufolge vorzugsweise um ein Trainingsverfahren zum Trainieren derartiger Systeme künstlicher Intelligenz.

Vorteilhaft ist es, wenn die oder eine der Bremsverlaufsangaben eine Bremswegverlängerungsangabe ist und eine simulierte oder real aufgetretene Bremswegverlängerung gegenüber einem Bremsweg bei trockener Schiene beschreibt und die zugeordnete Referenzangabe eine Referenzverlängerungsangabe ist.

Alternativ oder zusätzlich kann in vorteilhafter Weise vorgesehen sein, dass die oder eine der Bremsverlaufsangaben eine Bremskraftanteilsangabe ist und mittelbar oder unmittelbar den Anteil an Bremskraft verschleißfreier Bremsen an der Gesamtbremskraft beschreibt und die zugeordnete Referenzangabe eine Referenzanteilsangabe ist.

Alternativ oder zusätzlich kann in vorteilhafter Weise vorgesehen sein, dass die oder eine der Bremsverlaufsangaben eine Bremswegangabe ist und den simulierten oder real aufgetretenen Bremsweg beschreibt und die zugeordnete Referenzangabe eine Referenzbremswegangabe ist.

Bei einer als besonders vorteilhaft angesehenen Ausführungsvariante ist vorgesehen, dass eine erste Bremsverlaufsangabe eine Bremswegverlängerungsangabe ist und eine simulierte oder real aufgetretene Bremswegverlängerung gegenüber einem Bremsweg bei trockener Schiene beschreibt und eine erste Referenzangabe eine Referenzverlängerungsangabe ist, eine zweite Bremsverlaufsangabe eine Bremskraftanteilsangabe ist und mittelbar oder unmittelbar den Anteil an Bremskraft verschleißfreier Bremsen an der Gesamtbremskraft beschreibt und eine zweite Referenzangabe eine Referenzanteilsangabe ist, und eine dritte Bremsverlaufsangabe eine Bremswegangabe ist und den simulierten oder real aufgetretenen Bremsweg beschreibt und eine dritte Referenzangabe eine Referenzbremswegangabe ist. Vorzugsweise erfolgt eine Aktualisierung des Modifikationsverfahrens, wenn die Bremswegverlängerungsangabe die Referenzverlängerungsangabe unterschreitet und die Bremskraftanteilsangabe die Referenzanteilsangabe überschreitet. Die Aktualisierung erfolgt in vorteilhafter Weise, indem die aktuelle Bremswegverlängerungsangabe als neue Referenzverlängerungsangabe und die aktuelle Bremskraftanteilsangabe als neue Referenzanteilsangabe festgelegt wird.

Auch ist es vorteilhaft, wenn eine Aktualisierung des Modifikationsverfahrens erfolgt, wenn die Bremswegverlängerungsangabe die Referenzverlängerungsangabe unterschreitet und die Bremswegangabe die Referenzbremswegangabe unterschreitet, sofern die aktuelle Bremskraftanteilsangabe die Referenzanteilsangabe nicht oder zumindest nicht über ein vorgegebenes Maß hinaus unterschreitet, wobei die Aktualisierung vorzugsweise erfolgt, indem die aktuelle Bremswegverlängerungsangabe als neue Referenzverlängerungsangabe und die aktuelle Bremswegangabe als neue Referenzbremswegangabe festgelegt wird.

Das Sollkraftbestimmungsverfahren wird vorzugsweise solange modifiziert bzw. im Falle künstlicher Intelligenz solange trainiert, bis der Vergleich der Bremsverlaufsangaben mit den zugeordneten Referenzangaben eine vorgegebene Mindestqualität des Sollkraftbestimmungsverfahrens bestätigt.

Vorteilhaft ist es, wenn das Sollkraftbestimmungsverfahren im Rahmen eines iterativen Optimierungsverfahrens solange modifiziert/trainiert wird, bis die aktuelle Referenzverlängerungsangabe eine vorgegebene Maximalverlängerungsangabe unterschreitet und die aktuelle Referenzanteilsangabe eine vorgegebene Minimalanteilsangabe überschreitet.

Wie bereits erwähnt, ist es vorteilhaft, wenn das Sollkraftbestimmungsverfahren oder Verfahrensschritte davon durch zumindest ein angelerntes Computersystem künstlicher Intelligenz ausgeführt wird und das Modifizieren des Sollkraftbestimmungsverfahrens zumindest einen Anlernschritt zum Anlernen bzw. Trainieren des Computersystems einschließt.

Die Erfindung bezieht sich außerdem auf eine Sollkraftbestimmungseinrichtung. Erfindungsgemäß ist bezüglich einer solchen Sollkraftbestimmungseinrichtung vorgesehen, dass diese durch eine Recheneinrichtung gebildet ist, die derart programmiert ist, dass sie ein Sollkraftbestimmungsverfahren wie oben beschrieben ausführen kann. Bezüglich der Vorteile der erfindungsgemäßen Sollkraftbestimmungseinrichtung und deren vorteilhafter Ausgestaltungen sei auf die obigen Ausführungen im Zusammenhang mit dem erfindungsgemäßen Sollkraftbestimmungsverfahren und dessen vorteilhafter Ausgestaltungen verwiesen.

Die Erfindung bezieht sich außerdem auf eine Modifikationseinrichtung. Erfindungsgemäß ist bezüglich einer solchen Modifikationseinrichtung vorgesehen, dass diese durch eine Recheneinrichtung gebildet ist, die derart programmiert ist, dass sie ein Modifikationsverfahren wie oben beschrieben ausführen kann. Bezüglich der Vorteile der erfindungsgemäßen Modifikationseinrichtung und deren vorteilhafter Ausgestaltungen sei auf die obigen Ausführungen im Zusammenhang mit dem erfindungsgemäßen Modifikationsverfahren und dessen vorteilhafter Ausgestaltungen verwiesen.

Die Erfindung bezieht sich außerdem auf ein Computerprogrammprodukt. Erfindungsgemäß ist bezüglich des Computerprogrammprodukts vorgesehen, dass dieses derart ausgestaltet ist, dass es bei Ausführung durch eine Recheneinrichtung diese veranlasst, ein Sollkraftbestimmungsverfahren wie oben beschrieben und/oder ein Modifikationsverfahren wie oben beschrieben auszuführen.

Die Erfindung bezieht sich außerdem auf ein Fahrzeugsteuergerät für ein Schienenfahrzeug sowie auf ein Schienenfahrzeug als solches. Erfindungsgemäß ist diesbezüglich vorgesehen, dass das Fahrzeugsteuergerät bzw. das Schienenfahrzeug eine Sollkraftbestimmungseinrichtung und/oder eine Modifikationseinrichtung und/oder ein Computerprogrammprodukt wie oben beschrieben umfasst.

Die Erfindung wird nachfolgend anhand von Ausführungsbeispielen näher erläutert; dabei zeigen beispielhaft
- Figur 1: ein Ausführungsbeispiel für eine erfindungsgemäße Sollkraftbestimmungseinrichtung und eine erfindungsgemäße Modifikationseinrichtung,
- Figur 2: ein Ausführungsbeispiel für ein erfindungsgemäßes Schienenfahrzeug, das mit einer Sollkraftbestimmungseinrichtung, beispielsweise einer Sollkraftbestimmungseinrichtung gemäß den Figuren 1 oder 3 bis 6, und einer Modifikationseinrichtung, beispielsweise einer Modifikationseinrichtung gemäß den Figuren 1 oder 3 bis 6 ausgestattet ist, und
- Fig. 3-6: weitere Ausführungsbeispiele für erfindungsgemäße Sollkraftbestimmungseinrichtungen und erfindungsgemäße Modifikationseinrichtungen.

In den Figuren werden der Übersicht halber für identische oder vergleichbare Komponenten dieselben Bezugszeichen verwendet.

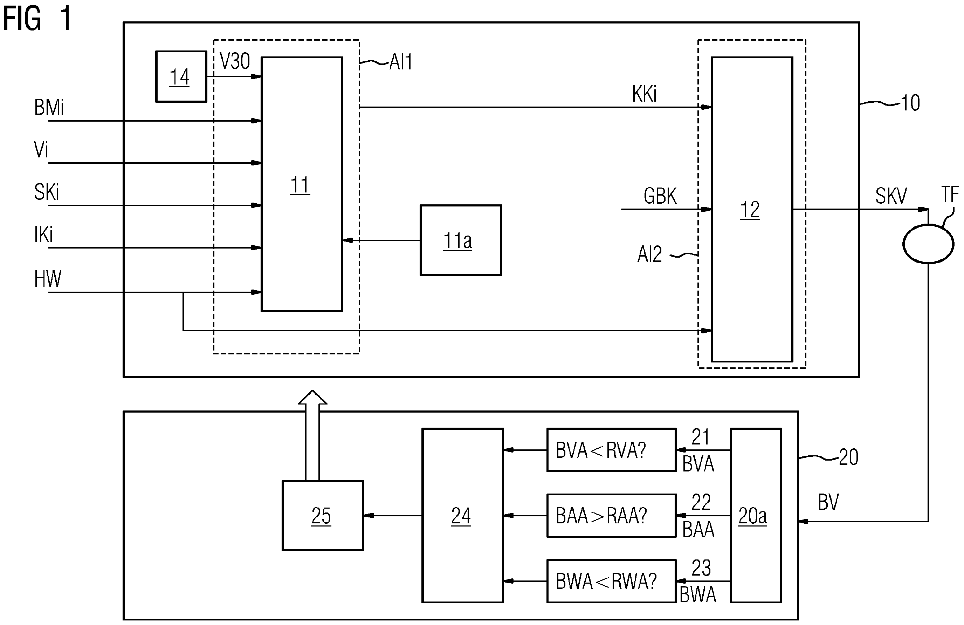

Die Figur 1 zeigt ein Ausführungsbeispiel für eine erfindungsgemäße Sollkraftbestimmungseinrichtung 10.

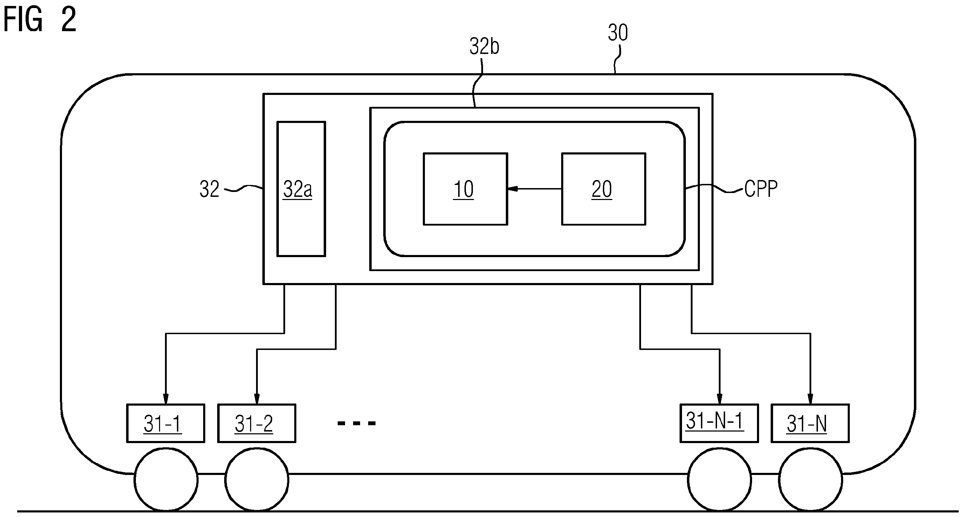

Eine Kannkraftbestimmungseinrichtung 11 der Sollkraftbestimmungseinrichtung 10 dient dazu, für jede von N Bremseinheiten 31-i (i=l...N) eines in der Figur 2 vereinfacht dargestellten, ein- oder mehrgliedrigen Schienenfahrzeugs 30 jeweils eine Kannbremskraftangabe KKi zu ermitteln, die das jeweils aktuelle maximale Bremsvermögen der jeweiligen Bremseinheit 31-i beschreibt.

Zu diesem Zwecke verarbeitet die Kannkraftbestimmungseinrichtung 11 für die Bremseinheiten 31-i jeweils eine Bremsmasseangabe BMi, die die von der jeweiligen Bremseinheit 31-i zu bremsende Masse beschreibt, und eine Achsgeschwindigkeitsangabe Vi, die die Achsgeschwindigkeit einer von der jeweiligen Bremseinheit 31-i gebremsten Achse beschreibt.

Darüber hinaus verarbeitet die Kannkraftbestimmungseinrichtung 11 für jede der Bremseinheiten 31-i jeweils eine Sollbremskraftangabe SKi, die die von der jeweiligen Bremseinheit 31-i aufzubringende Sollbremskraft beschreibt, und eine Istbremskraftangabe IKi, die die von der jeweiligen Bremseinheit 31-i zum jeweiligen Erfassungszeitpunkt tatsächlich realisierte Istbremskraft beschreibt und von der zugeordneten Sollbremskraftangabe SKi abweichen kann.

Bei dem Ausführungsbeispiel gemäß Figur 1 verarbeitet die Kannkraftbestimmungseinrichtung 11 außerdem eine Fahrzeuggeschwindigkeitsangabe V30, die die Fahrzeuggeschwindigkeit des Schienenfahrzeugs 30 angibt, und einen Haftwert HW, der den aktuellen Rad-Schiene-Kontakt beschreibt. Die Fahrzeuggeschwindigkeitsangabe V30 kann von einem Geschwindigkeitsermittlungssystem 14 der Sollkraftbestimmungseinrichtung 10 erzeugt werden.

Die Kannkraftbestimmungseinrichtung 11 kann durch ein angelerntes Computersystem künstlicher Intelligenz gebildet sein, das unter Heranziehung simulierter oder gemessener Kannbremskraftangaben KKi und den korrespondierenden Eingabewerten, also den korrespondierenden Sollbremskraftangaben SKi, den korrespondierenden Istbremskraftangaben IKi, den korrespondierenden Bremsmasseangaben BMi und den korrespondierenden Achsgeschwindigkeitsangaben Vi in vorherigen Anlernschritten angelernt worden ist. Ein solches Computersystem künstlicher Intelligenz ist in der Figur 1 mit dem Bezugszeichen AI1 gekennzeichnet und wird nachfolgend auch als angelerntes Kannkraftermittlungssystem AI1 künstlicher Intelligenz bezeichnet. Das Kannkraftermittlungssystem AI1 künstlicher Intelligenz kann beispielsweise auf einem neuronalen Netz beruhen bzw. ein solches umfassen.

Das Trainieren bzw. Anlernen des Kannkraftermittlungssystems AI1 kann durch eine Anlern- bzw. Trainingseinrichtung 11a erfolgen, wie sie zum Trainieren künstlicher Intelligenz, insbesondere zum Trainieren neuronaler Netze, allgemein bekannt ist.

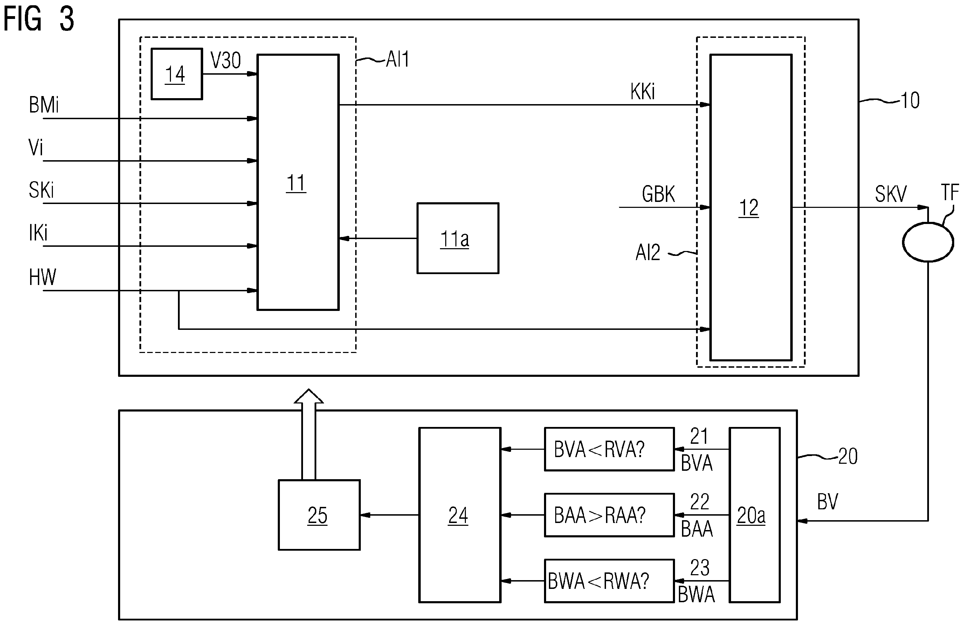

Das Geschwindigkeitsermittlungssystem 14, das die Fahrzeuggeschwindigkeitsangabe V30 erzeugt, kann eine separate Einheit sein, wie die Figur 1 zeigt, oder ein Bestandteil des angelernten Kannkraftermittlungssystems AI1, wie die Figur 3 beispielhaft zeigt.

Die Sollkraftbestimmungseinrichtung 10 umfasst außerdem eine Verteileinrichtung 12, zu der die Kannbremskraftangaben KKi der Kannkraftbestimmungseinrichtung 11 gelangen. Die Verteileinrichtung 12 verteilt eine vorgegebene, von dem Schienenfahrzeug 30 zu erbringende Gesamtbremskraft GBK anhand der Kannbremskraftangaben KKi unter Bildung einer Sollkraftverteilung SKV auf die einzelnen Bremseinheiten 31-i.

Die Verteileinrichtung 12 kann durch ein angelerntes Computersystem künstlicher Intelligenz gebildet sein, das unter Heranziehung simulierter oder gemessener Kannbremskraftangaben KKi und simulierter oder gemessener Sollkraftverteilungen angelernt worden ist. Mit anderen Worten kann die Verteileinrichtung 12 also ein angelerntes Computersystem künstlicher Intelligenz sein, wie es in der Figur 1 und 3 mit dem Bezugszeichen AI2 gekennzeichnet ist; das Computersystem AI2 wird - zur Unterscheidung vom Kannkraftermittlungssystem AI1 - nachfolgend auch als angelerntes Sollkraftverteilungssystem künstlicher Intelligenz bezeichnet.

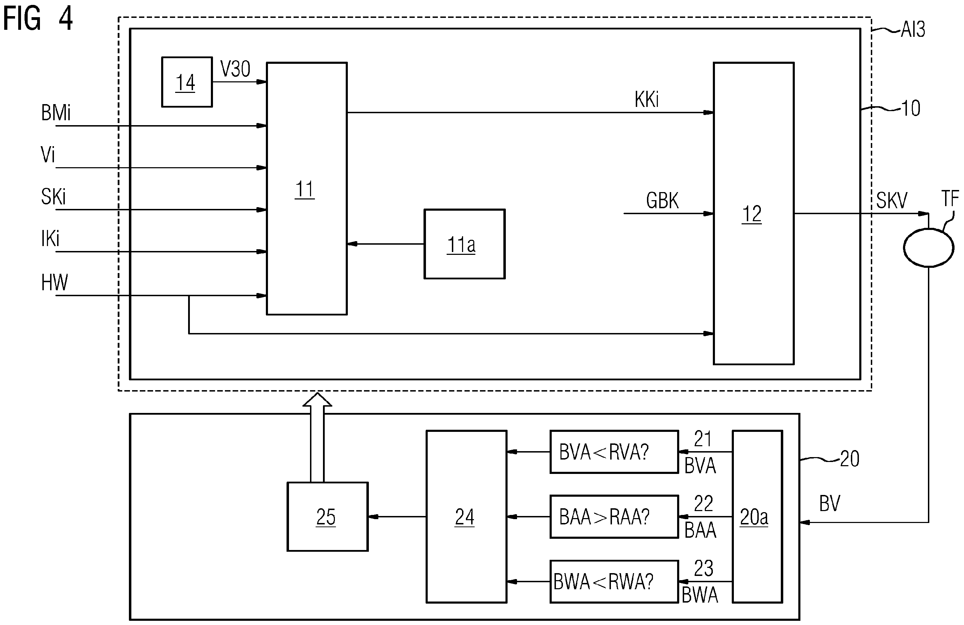

Auch können die Kannkraftbestimmungseinrichtung 11 und die Verteileinrichtung 12 durch ein gemeinsames angelerntes Computersystem künstlicher Intelligenz gebildet sein, das sowohl die Funktion der Kannkraftbestimmungseinrichtung 11 als auch die Funktion der Verteileinrichtung 12 wahrnimmt und zu diesem Zwecke entsprechend trainiert worden ist; eine solche Ausgestaltung zeigt beispielhaft die Figur 4, in der das angelernte Computersystem mit dem Bezugszeichen AI3 gekennzeichnet ist. Die Anlern- bzw. Trainingseinrichtung 11a und/oder das Geschwindigkeitsermittlungssystem 14 sind vorzugsweise Bestandteile des letztgenannten Computersystems AI3 künstlicher Intelligenz.

Die Verteileinrichtung 12 wird vorzugsweise derart ausgebildet bzw. trainiert, dass die verschleißfreien Bremsen wie zum Beispiel elektrodynamische Bremsen (ED-Bremsen) maximal ausgenutzt werden, wobei die Bremswegverlängerung auf einem akzeptablen Niveau gehalten werden soll. Dies ist in einfacher Weise möglich, weil durch die Kannbremskraftangaben KKi bekannt ist, wie stark die einzelnen Bremseinheiten 31-i tatsächlich genutzt werden können. Der Anteil der Gesamtbremskraft GBK, der nicht auf die ED-Bremsen verteilt wird, kann z. B. masseproportional auf verschleißbehaftete Bremsen (z. B. EP-Bremsen) verteilt werden oder auf andere Weise.

Zusätzlich kann die Verteileinrichtung 12 die Verteilung der Sollkräfte auch dazu nutzen, die Kannkräfte der ED-Bremse zu erhöhen: Zum Beispiel können vorlaufende Achsen bzw. Wagen stärker gebremst werden, um mit diesen die Schiene aufzurauen und dadurch die Haftverhältnisse für nachlaufende Achsen oder nachlaufende Wagen und deren Bremseinheiten zu erhöhen.

Alternativ oder zusätzlich können Klotzbremsen - durch ein nur leichtes Anlegen bzw. Aktivieren - genutzt werden, um die von den Klotzbremsen gebremsten Räder aufzurauen, wodurch der Haftwert zwischen Rad und Schiene erhöht und dadurch die Kannkraft der jeweiligen Bremseinheit 31-i ebenfalls erhöht wird.

Die von der Verteileinrichtung 12 ermittelte Sollkraftverteilung SKV gelangt zu einer Modifikationseinrichtung 20, die das von der Kannkraftbestimmungseinrichtung 11 und der Verteileinrichtung 12 ausgeführte Sollkraftbestimmungsverfahren bewerten sowie modifizieren bzw. optimieren kann, beispielsweise im Rahmen eines Trainings künstlicher Intelligenz. Die Modifikationseinrichtung 20 wertet zu diesem Zwecke einen Bremsverlauf BV, der auf der Basis der Sollkraftverteilung SKV der Sollkraftbestimmungseinrichtung 10 simuliert oder real beispielsweise im Rahmen einer Testfahrt TF durchgeführt worden ist, mittels einer Vorverarbeitungseinheit 20a hinsichtlich dreier Bremsverlaufsangaben aus:
Eine erste Bremsverlaufsangabe ist eine Bremswegverlängerungsangabe BVA und beschreibt eine simulierte oder real aufgetretene Bremswegverlängerung gegenüber einem Bremsweg bei trockener Schiene; eine erste Referenzangabe ist eine Referenzverlängerungsangabe RVA.

Eine zweite Bremsverlaufsangabe ist eine Bremskraftanteilsangabe BAA und beschreibt mittelbar oder unmittelbar den Anteil an Bremskraft verschleißfreier Bremsen an der Gesamtbremskraft GBK; eine zweite Referenzangabe ist eine Referenzanteilsangabe RAA.

Eine dritte Bremsverlaufsangabe ist eine Bremswegangabe BWA und beschreibt den simulierten oder real aufgetretenen Bremsweg; eine dritte Referenzangabe ist eine Referenzbremswegangabe RWA.

Bei dem Ausführungsbeispiel gemäß Figur 1 übt die Modifikationseinrichtung 20 zwei Funktionen aus:
Zum einen aktualisiert die Modifikationseinrichtung 20 die Referenzangaben anhand simulierter oder gemessener Bremsverläufe BV, um optimale Werte für die Referenzangaben zu ermitteln.

Zum anderen kann die Modifikationseinrichtung 20 das Sollkraftbestimmungsverfahren bzw. die Sollkraftbestimmungseinrichtung 10 modifizieren bzw. neu trainieren, damit diese stets eine möglichst optimale Sollkraftverteilung SKV ermitteln kann. Die Entscheidung, ob ein Modifizieren oder Trainieren des Sollkraftbestimmungsverfahrens erfolgen soll, hängt beispielsweise von den jeweils aktuellen Referenzangaben ab.

Die Aktualisierung der Referenzangaben erfolgt vorzugsweise, wenn die aktuelle Bremswegverlängerungsangabe BVA (des aktuell betrachteten, simulierten oder gemessenen Bremsverlaufs BV) die Referenzverlängerungsangabe RVA unterschreitet und die aktuelle Bremskraftanteilsangabe BAA (des aktuell betrachteten, simulierten oder gemessenen Bremsverlaufs BV) die Referenzanteilsangabe RAA überschreitet, wobei die Aktualisierung erfolgt, indem die aktuelle Bremswegverlängerungsangabe BVA als neue Referenzverlängerungsangabe RVA und die aktuelle Bremskraftanteilsangabe BAA als neue Referenzanteilsangabe RAA festgelegt wird.

Darüber hinaus aktualisiert die Modifikationseinrichtung 20 die Referenzangaben, wenn die aktuelle Bremswegverlängerungsangabe BVA (des aktuell betrachteten, simulierten oder gemessenen Bremsverlaufs BV) die Referenzverlängerungsangabe RVA unterschreitet und die aktuelle Bremswegangabe BWA (des aktuell betrachteten, simulierten oder gemessenen Bremsverlaufs BV) die Referenzbremswegangabe RWA unterschreitet, sofern die aktuelle Bremskraftanteilsangabe BAA die Referenzanteilsangabe RAA nicht oder zumindest nicht über ein vorgegebenes Maß hinaus unterschreitet, wobei die Aktualisierung erfolgt, indem die aktuelle Bremswegverlängerungsangabe BVA als neue Referenzverlängerungsangabe RVA und die aktuelle Bremswegangabe BWA als neue Referenzbremswegangabe RWA festgelegt wird.

Die Prüfung, ob die aktuelle Bremswegverlängerungsangabe BVA die Referenzverlängerungsangabe RVA unterschreitet, die aktuelle Bremskraftanteilsangabe BAA die Referenzanteilsangabe RBA überschreitet und die aktuelle Bremswegangabe BWA die Referenzbremswegangabe RWA unterschreitet, erfolgt bei den Ausführungsbeispielen gemäß den Figuren 1 bis 6 vorzugsweise in Funktionsblöcken 21 bis 23.

Die Aktualisierung der Referenzangaben erfolgt vorzugsweise in einem Funktionsblock 24.

Für die Modifikation bzw. das Anlernen und Training der Sollkraftbestimmungseinrichtung 10 führt die Modifikationseinrichtung 20 vorzugsweise ein iteratives Optimierungsverfahren in Form eines KI-Trainingsverfahrens für die Sollkraftbestimmungseinrichtung 10 durch. Das Training der Sollkraftbestimmungseinrichtung 10 erfolgt bei dem Ausführungsbeispiel gemäß Figur 1 durch einen Funktionsblock 25 in Form einer Trainingseinrichtung für Systeme künstlicher Intelligenz.

Das Training erfolgt vorzugsweise solange bzw. iterativ sooft, bis die aktuelle Referenzverlängerungsangabe RVA eine vorgegebene Maximalverlängerungsangabe RVAmax unterschreitet und die aktuelle Referenzanteilsangabe RBA eine vorgegebene Minimalanteilsangabe RBAmin überschreitet. Das iterative Optimierungsverfahren basiert vorzugsweise auf einem Gradientenverfahren, wie es im Bereich von Trainingsverfahren für Systeme künstlicher Intelligenz allgemein bekannt ist.

Wenn die beiden genannten Kriterien erfüllt sind, also die aktuelle Referenzverlängerungsangabe RVA die vorgegebene Maximalverlängerungsangabe RVAmax unterschreitet und die aktuelle Referenzanteilsangabe RBA die vorgegebene Minimalanteilsangabe RBAmin überschreitet, so geht die Modifikationseinrichtung 20 davon aus, dass das Sollkraftbestimmungsverfahren eine vorgegebene Mindestqualität erfüllt und unverändert bleiben darf.

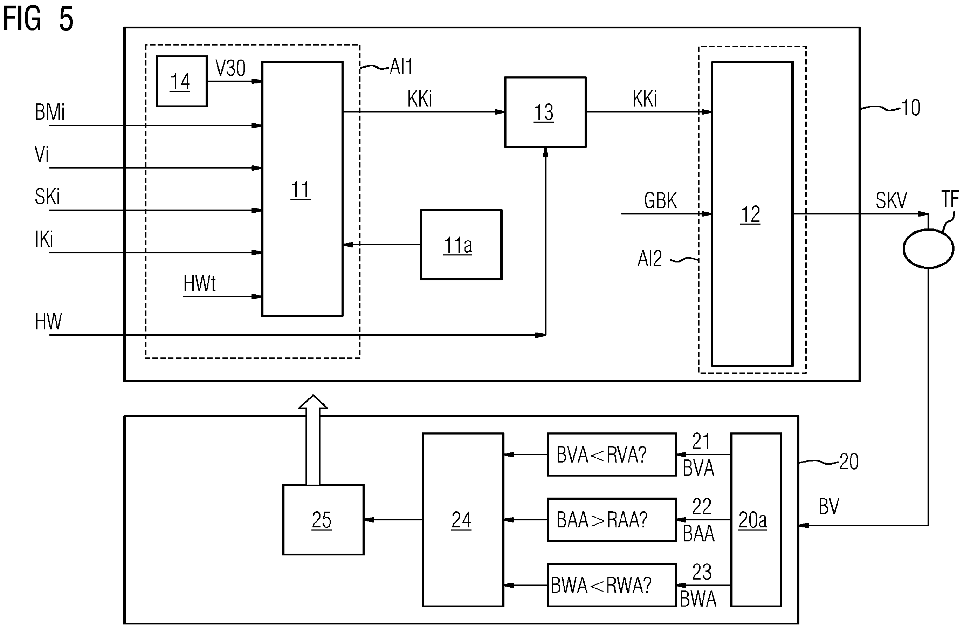

Die Figur 5 zeigt ein weiteres Ausführungsbeispiel für die Kannkraftbestimmungseinrichtung 11. Bei dem Ausführungsbeispiel gemäß Figur 5 arbeitet die Kannkraftbestimmungseinrichtung 11 auf der Basis eines Haftwerts HWt für eine trockene Schiene. Eine Anpassung der Kannbremskraftangaben KKi an die tatsächlichen Haftverhältnisse erfolgt nachträglich in einer Korrektureinrichtung 13 unter Berücksichtigung des Haftwerts HW, der den aktuellen tatsächlichen Rad-Schiene-Kontakt beschreibt. Ansonsten gelten die obigen Erläuterungen im Zusammenhang mit den Figuren 1 bis 4 entsprechend.

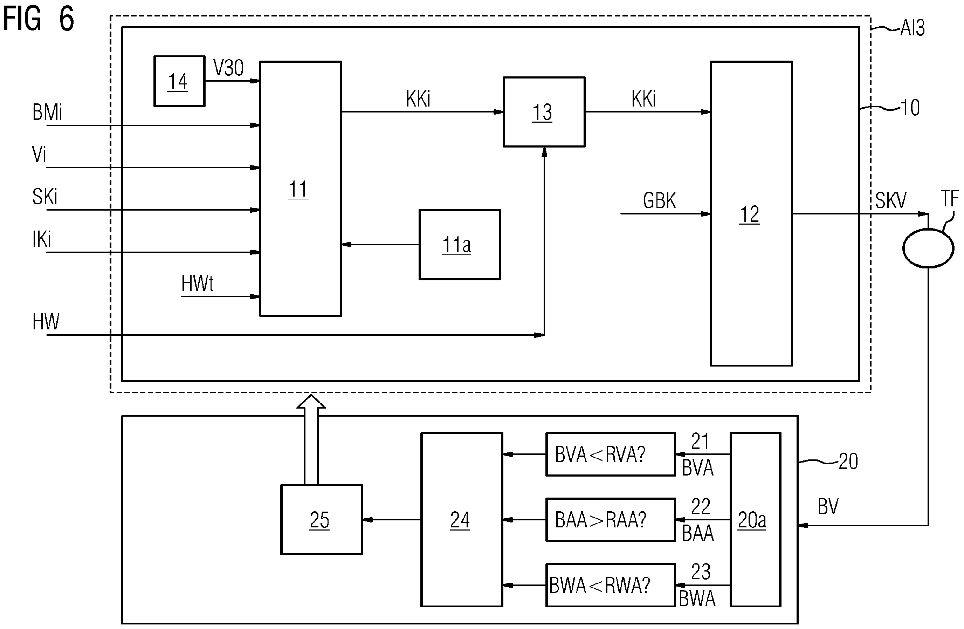

Die Korrektureinrichtung 13 kann in dem in der Figur 4 gezeigten angelernten Computersystem AI3 integriert sein, wie die Figur 6 beispielhaft zeigt.

Die Sollkraftbestimmungseinrichtung 10 und die Modifikationseinrichtung 20, wie sie oben im Zusammenhang mit den Figuren 1 und 3 bis 6 erläutert wurden, sind vorzugsweise in einem Fahrzeugsteuergerät 32 (vgl. Figur 2), bei dem es sich beispielsweise um ein ATO-Fahrzeugsteuergerät zum autonomen Fahren handeln kann, als Computerprogrammprodukt CPP integriert, das die Arbeitsweise einer Recheneinrichtung 32a des Fahrzeugsteuergeräts 32 steuern kann. Das Computerprogrammprodukt CPP kann in einem Speicher 32b des Fahrzeugsteuergeräts 32 gespeichert sein.

Die oben beschriebenen Ausführungsbeispiele können einzelne oder mehrere der nachfolgend stichpunktartig aufgeführten Vorteile bzw. Eigenschaften aufweisen:
- Auf Grundlage der aktuellen Soll- und Istbremskräfte einer Bremseinheit, deren zugehörige Masse und Achsgeschwindigkeiten und der Fahrzeuggeschwindigkeit kann ermittelt werden, welche Bremskraft diese Bremseinheit umsetzen kann. Basis dafür kann eine Schätzung des Haftwertes Rad/Schiene für die jeweilige Bremseinheit sein. Diese Kannbremskraft kann wegen schlechten Haftwertverhältnissen reduziert sein gegenüber der Kannbremskraft, welche die Bremseinheit unter normalen Bedingungen bzw. trockenen Schienen umsetzen kann.
- Die korrigierten Kannkräfte je Bremseinheit werden zusammen mit der Soll-Zugbremskraft einem Verteilalgorithmus übergeben, der auf dieser Grundlage Sollkräfte ausgibt, die die ED-Bremsen maximal ausnutzen und die Bremswegverlängerung auf einem akzeptablen Niveau hält. Denn durch die korrigierten Kannkräfte ist bekannt, welche Bremseinheiten tatsächlich wie stark beaufschlagt werden können. Der Anteil der Soll-Zugbremskraft, der nicht auf die ED-Bremsen verteilt wird, kann z. B. masseproportional auf die EP-Bremsen verteilt werden oder komplexer. Wenn die korrigierten Kannkräfte insgesamt nicht ausreichend sind für die Soll-Zugbremskraft, wird z. B. masseproportional nachverteilt oder komplexer.
- Zusätzlich kann die Verteilung der Sollkräfte auch dazu genutzt werden, um die korrigierten Kannkräfte der ED-Bremse zu erhöhen. Z. B. indem vorlaufende Wägen stärker gebremst werden, können diese durch den gegebenenfalls stärker werdenden Schlupf die Schiene aufrauen, sodass der Haftwert Rad/Schiene für den nachlaufenden Wagen mit ED-Bremse erhöht wird und dies anhand der Eingangswerte erkannt wird. Oder eine gegebenenfalls vorhandene Klotzbremse kann durch leichtes Anlegen genutzt werden, um das Rad der Bremseinheit mit ED-Bremse aufzurauen, sodass ebenfalls der Haftwert Rad/Schiene erhöht wird.
- Dabei kann künstliche Intelligenz (KI) und Maschine Learning, z. B. mittels neuronaler Netze, genutzt werden, um die korrigierten Kannkräfte zu berechnen und anschließend die Verteilung durchzuführen. Oder man trennt diese Schritte nicht in verschiedene KIs auf, sondern lässt eine KI direkt auf Basis der genannten Eingangsgrößen direkt die Verteilung der Sollbremskräfte ermitteln.
- Eine gut trainierte KI ist relativ schnell in der Lage, die Verteilung anzupassen, wenn sich die Haftwertbedingungen ändern.
- Die KI kann bei realen Fahrten und/oder mit Simulationen im Labor trainiert werden. Bei Simulationen sollte dazu ein möglichst realitätsnahes Haftwertmodell des Rad/Schiene-Kontaktes verwendet werden, um auch in der Realität gute Ergebnisse zu erzielen. Möglich wäre, die KI anhand von Simulationen zu trainieren, bis ein akzeptables Niveau erreicht ist und dann mit realen Messfahrten die KI zu optimieren.
- Die Kriterien für das Training der KI(s) sind vorzugsweise :
   1. Priorität: Keine Überschreitung der Bremswegverlängerung über einen bestimmten Wert
   2. Priorität: Maximale Ausnutzung der ED-Bremsen im Zug
   3. Priorität: Unter Einhaltung der 1. und 2. Priorität möglichst geringe Bremswegverlängerung.
- Vorteile der beschriebenen Ausführungsbeispiele sind:
   1. Es kann unter Einhaltung der Bremswegziele die ED-Bremse stärker als bei aktuell angewendeten Methoden ausgenutzt werden.
   2. Es kann durch die Nutzung einer künstlichen Intelligenz relativ einfach die zu verarbeitende Zahl der Eingangsgrößen erhöht werden (z. B. um Werte aus der Vergangenheit) und dieser Informationsgewinn kann nutzbar gemacht werden. Dadurch wird es einfach und mit vertretbarem Aufwand machbar, oben beschriebener optimaler Verteilung näher zu kommen.
   3. Es sind in kürzerer Zeit deutlich komplexere Verteilstrategien realisierbar, die besser auf das Ziel angepasst sind.
   4. Durch den Einsatz einer KI können auch neue Strategien und Zusammenhänge zu diesem komplexen Thema erkannt werden.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

## Patentansprüche

1. Sollkraftbestimmungsverfahren zum Ermitteln einer Sollkraftverteilung (SKV), die die Sollkraft zumindest zweier Bremseinheiten (31-i) eines Schienenfahrzeugs (30) während eines realen oder simulierten Bremsbetriebs beschreibt,
**dadurch gekennzeichnet, dass**
- den zumindest zwei Bremseinheiten (31-i) jeweils eine Sollbremskraftangabe (SKi) zugeordnet wird, die die von der jeweiligen Bremseinheit (31-i) aufzubringende Sollbremskraft beschreibt,
- für die zumindest zwei Bremseinheiten (31-i) jeweils die tatsächlich realisierte Istbremskraft unter Bildung einer Istbremskraftangabe (IKi) ermittelt wird,
- für jede Bremseinheit (31-i) jeweils eine Kannbremskraftangabe (KKi), die das maximale Bremsvermögen der jeweiligen Bremseinheit (31-i) beschreibt, ermittelt wird, und zwar unter Einbezug einer Bremsmasseangabe (BMi), die die von der jeweiligen Bremseinheit (31-i) zu bremsende Masse beschreibt, und einer Achsgeschwindigkeitsangabe (Vi), die die Achsgeschwindigkeit einer Achse, die von der jeweiligen Bremseinheit (31-i) gebremst wird, beschreibt, und
- eine vorgegebene, von dem Schienenfahrzeug (30) zu erbringende Gesamtbremskraft (GBK) anhand der Kannbremskraftangaben (KKi) unter Bildung der Sollkraftverteilung (SKV) auf die Bremseinheiten (31-i) verteilt wird.

2. Sollkraftbestimmungsverfahren nach Anspruch 1,
**dadurch gekennzeichnet, dass**
- mindestens eine der Bremseinheiten (31-i) eine Radbremseinrichtung aufweist, die auf ein Rad der von der Bremseinheit (31-i) gebremsten Achse einwirkt und deren Temperatur und/oder Laufflächenbeschaffenheit beeinflusst, und
- die Ermittlung der Kannbremskraftangabe (KKi) dieser Bremseinheit (31-i) den von der Radbremseinrichtung hervorgerufenen Einfluss auf den Rad-Schiene-Kontakt zwischen dem von der Radbremseinrichtung gebremsten Rad und einer von dem Rad befahrenen Schiene berücksichtigt.

3. Sollkraftbestimmungsverfahren nach einem der voranstehenden Ansprüche,
**dadurch gekennzeichnet, dass** die Ermittlung der Kannbremskraftangaben (KKi) den von vorauslaufenden Bremseinheiten (31-i) hervorgerufenen Einfluss auf die Kannbremskraft nachlaufender Bremseinheiten (31-i) berücksichtigt.

4. Sollkraftbestimmungsverfahren nach einem der voranstehenden Ansprüche,
**dadurch gekennzeichnet, dass** die Ermittlung der Kannbremskraftangaben (KKi) von einem angelernten Kannbremskraftermittlungssystem (AI1, AI3) künstlicher Intelligenz durchgeführt wird, das unter Heranziehung simulierter und/oder gemessener Kannbremskraftangaben (KKi) unter Einbezug der korrespondierenden Sollbremskraftangaben (SKi), Istbremskraftangaben (IKi), Bremsmasseangaben (BMi) und Achsgeschwindigkeitsangaben (Vi) trainiert worden ist.

5. Modifikationsverfahren zum Modifizieren eines Sollkraftbestimmungsverfahrens nach einem der voranstehenden Ansprüche,
**dadurch gekennzeichnet, dass**
- ein Bremsverlauf (BV), der auf der Basis einer Sollkraftverteilung (SKV), die nach einem Sollkraftbestimmungsverfahren nach einem der voranstehenden Ansprüche ermittelt worden ist, simuliert oder real durchgeführt worden ist, hinsichtlich zumindest einer Bremsverlaufsangabe ausgewertet wird,
- die zumindest eine Bremsverlaufsangabe mit einer zugeordneten Referenzangabe verglichen wird und
- in Abhängigkeit vom Ergebnis des Vergleichs das Sollkraftbestimmungsverfahren und/oder das Modifikationsverfahren modifiziert wird oder eine Modifikation unterbleibt.

6. Modifikationsverfahren nach Anspruch 5,
**dadurch gekennzeichnet, dass**
- eine erste Bremsverlaufsangabe eine Bremswegverlängerungsangabe (BVA) ist und eine simulierte oder real aufgetretene Bremswegverlängerung gegenüber einem Bremsweg bei trockener Schiene beschreibt und eine erste Referenzangabe eine Referenzverlängerungsangabe (RVA) ist,
- eine zweite Bremsverlaufsangabe eine Bremskraftanteilsangabe (BAA) ist und mittelbar oder unmittelbar den Anteil an Bremskraft verschleißfreier Bremsen an der Gesamtbremskraft beschreibt und eine zweite Referenzangabe eine Referenzanteilsangabe (RAA) ist und
- eine dritte Bremsverlaufsangabe eine Bremswegangabe (BWA) ist und den simulierten oder real aufgetretenen Bremsweg beschreibt und eine dritte Referenzangabe eine Referenzbremswegangabe (RWA) ist.

7. Modifikationsverfahren nach Anspruch 6,
**dadurch gekennzeichnet, dass**
- eine Aktualisierung des Modifikationsverfahrens erfolgt, wenn die Bremswegverlängerungsangabe (BVA) die Referenzverlängerungsangabe (RVA) unterschreitet und die Bremskraftanteilsangabe (BAA) die Referenzanteilsangabe (RAA) überschreitet,
- wobei die Aktualisierung erfolgt, indem die aktuelle Bremswegverlängerungsangabe (BVA) als neue Referenzverlängerungsangabe (RVA) und die aktuelle Bremskraftanteilsangabe (BAA) als neue Referenzanteilsangabe (RAA) festgelegt wird.

8. Modifikationsverfahren nach einem der voranstehenden Ansprüche 6 bis 7,
**dadurch gekennzeichnet, dass**
- eine Aktualisierung des Modifikationsverfahrens erfolgt, wenn die Bremswegverlängerungsangabe (BVA) die Referenzverlängerungsangabe (RVA) unterschreitet und die Bremswegangabe (BWA) die Referenzbremswegangabe (RWA) unterschreitet, sofern die aktuelle Bremskraftanteilsangabe (BAA) die Referenzanteilsangabe (RAA) nicht oder zumindest nicht über ein vorgegebenes Maß hinaus unterschreitet,
- wobei die Aktualisierung erfolgt, indem die aktuelle Bremswegverlängerungsangabe (BVA) als neue Referenzverlängerungsangabe (RVA) und die aktuelle Bremswegangabe (BWA) als neue Referenzbremswegangabe (RWA) festgelegt wird.

9. Modifikationsverfahren nach einem der voranstehenden Ansprüche 5 bis 8,
**dadurch gekennzeichnet, dass** das Sollkraftbestimmungsverfahren solange modifiziert wird, bis der Vergleich der Bremsverlaufsangaben mit den zugeordneten Referenzangaben eine vorgegebene Mindestqualität des Sollkraftbestimmungsverfahrens bestätigt.

10. Modifikationsverfahren nach einem der voranstehenden Ansprüche 6 bis 9,
**dadurch gekennzeichnet, dass** das Sollkraftbestimmungsverfahren im Rahmen eines iterativen Optimierungsverfahrens solange modifiziert wird, bis die aktuelle Referenzverlängerungsangabe (RVA) eine vorgegebene Maximalverlängerungsangabe unterschreitet und die aktuelle Referenzanteilsangabe (RAA) eine vorgegebene Minimalanteilsangabe überschreitet.

11. Modifikationsverfahren nach einem der voranstehenden Ansprüche 5 bis 10,
**dadurch gekennzeichnet, dass** das Sollkraftbestimmungsverfahren oder Verfahrensschritte davon durch ein angelerntes Computersystem (AI1, AI3) künstlicher Intelligenz ausgeführt werden und das Modifikationsverfahren zum Modifizieren des Sollkraftbestimmungsverfahrens einen Trainingsschritt zum Trainieren des Computersystems einschließt.

12. Sollkraftbestimmungseinrichtung (10),
**dadurch gekennzeichnet, dass** diese durch eine Recheneinrichtung (32a) gebildet ist, die derart programmiert ist, dass sie ein Sollkraftbestimmungsverfahren nach einem der voranstehenden Ansprüche 1 bis 4 ausführen kann.

13. Modifikationseinrichtung (20),
**dadurch gekennzeichnet, dass** diese durch eine Recheneinrichtung (32a) gebildet ist, die derart programmiert ist, dass sie ein Modifikationsverfahren nach einem der voranstehenden Ansprüche 5 bis 11 ausführen kann.

14. Computerprogrammprodukt (CPP),
**dadurch gekennzeichnet, dass** das Computerprogrammprodukt (CPP) bei Ausführung durch eine Recheneinrichtung (32a) diese veranlasst, ein Sollkraftbestimmungsverfahren nach einem der voranstehenden Ansprüche 1 bis 4 und/oder ein Modifikationsverfahren nach einem der voranstehenden Ansprüche 5 bis 13 auszuführen.

15. Fahrzeugsteuergerät (32) für ein Schienenfahrzeug (30),
**dadurch gekennzeichnet, dass** das Fahrzeugsteuergerät (32) eine Sollkraftbestimmungseinrichtung (10) nach Anspruch 12 und/oder eine Modifikationseinrichtung nach Anspruch 13 und/oder ein Computerprogrammprodukt (CPP) nach Anspruch 14 umfasst.
